# EUROPEAN PATENT APPLICATION

(11) **EP 2 703 533 A1**
(43) Date of publication of application: **05.03.2014**
(21) Application number: 12182863.6
(22) Date of filing: 04.09.2012
(51) Int. Cl.: D04B 21/10, B60R 21/06

(54) **A cargo net**

(71) Applicant: Volvo Car Corporation, 40531 Göteborg (SE)
(72) Inventor: Svensson, Birger, 42932 Kullavik (SE); Zengin, Fatma, 46331 Lilla Edet (SE)

(57) **Abstract**

A load-restraining net (1) comprises a plurality of netting strands (2) providing a mesh. The net (1) further comprises a reinforcing edge (3) on at least a part of the net periphery. The reinforcing edge (3) constitutes a part of the net (1) as woven

## Description

### FIELD OF THE INVENTION

The present invention relates to a load-restraining net comprising a plurality of netting strands providing a mesh, further comprising a reinforcing edge on at least a part of the net periphery.

### BACKGROUND

Many utility and sport vehicle interiors are configured with a cargo or storage compartment disposed directly to the rear of a passenger compartment. The boundary separating these spaces is primarily open such that the only obstruction there between is provided by the rear seat rest of the vehicle. This presents a fully exposed area between the upper edge of the rear seat rest and the interior vehicle roof. Accordingly, these configurations pose a potential safety risk in the event of a collision, a sudden speed reduction or a change of direction of the vehicle. In these situations, unsecured cargo and the like may be thrust forward from the storage compartment space into the passenger compartment where it may cause injury to passengers.

Prior art cargo restraints or safety web arrangements have been proposed to address this problem. For example, EP 1 128 992 shows a known arrangement that utilizes a generally rectangular safety web suspended transversely between the passenger compartment and the storage compartment. The web arrangement attaches to the vehicle at its upper and lower side edges. The upper and lower side edge of the web contains rod-like frames, which are each provided with a hinge to allow folding of the safety web when not in use. This known safety web arrangement is provided with hinges in order to facilitate handling and stowing of the safety web. When not in use, the safety web can be wound onto one of the two struts and it then occupies correspondingly little space. However, when mounting or removing this safety web, the relatively long struts and the locking/unlocking of the hinges present a problem in handling the web.

Other solutions show cargo restraint constructions that can easily be folded and stored in the vehicle. For folding the net when not in use it includes a frame support which is deformable in preselected locations to transfer tension forces applied to the restraint and to reduce the risk of tearing or breakage of a web or net making.

However, an issue with all prior art solutions is that they are relatively heavy and the production of these cargo restraints includes several different steps which adds to the production cost.

### SUMMARY OF THE INVENTION

The object of the present invention is to provide a load restraining net for alleviating the above mentioned problems.

This object is achieved by the load restraining net as set forth in the appended claims.

A load-restraining net according to the present invention comprises a plurality of netting strands providing a mesh. It further comprises a reinforcing edge on at least a part of the net periphery and the reinforcing edge constitutes a part of the net as woven. Thus, the load-restraining net can thus be produced in a single knitting machine which will reduce both weight and cost of the ready to use net.

According to one aspect of the present invention the reinforcing edge surrounds the entire net. The overall strength of the net is thus greater than the traditional prior art load-restraining net where there is some kind of reinforcement on the lower and upper side of the net and in that case mainly present for providing attachment points.

According to a further aspect of the present invention the reinforcing edge comprises at least two loops for attaching the net to an object. The net could thus be attached with the loop to a vehicle having a kind of hook structure.

According to another aspect of the present invention the reinforcing edge is a tubular knit. A tubular knit has high strength and it is possible to have it slightly more flexible than for instance a rope.

According to yet another aspect of the present invention a set of strands from one side of the net towards the centre of the net are arranged such that each strand in said at least one set has a radius in the plane of net with a decreasing radius towards the centre of the net. By arranging the strands in this way a load will be more evenly distributed and the strength of the net will thus be greater than that of a regular "square" net.

### BRIEF DESCRIPTION OF THE DRAWINGS

The invention will now be further disclosed with reference to the accompanying drawings which show an example of a load restraining net according to the present invention.

### DISCLOSURE OF PREFERRED EMBODIMENTS

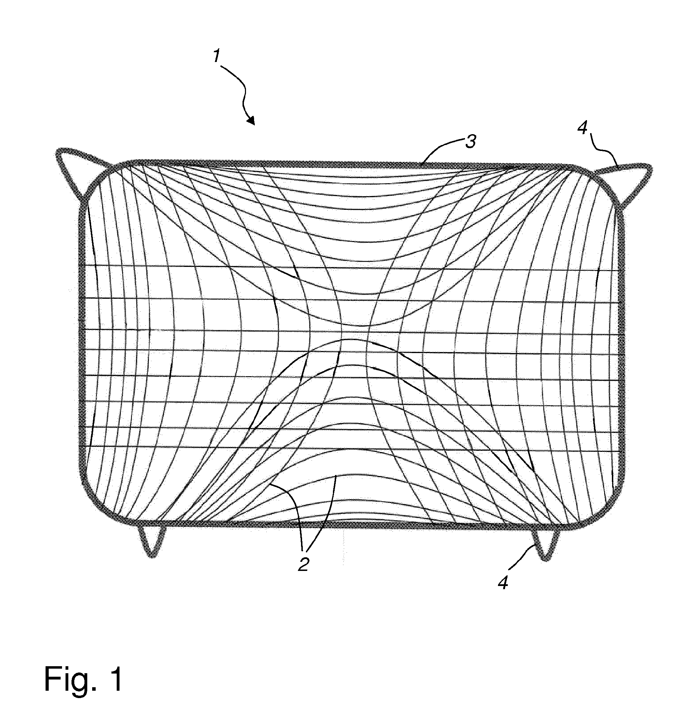

Figure 1 shows a load-restraining net 1 according to one embodiment of the present invention, comprising a plurality of netting strands 2 providing a mesh, further comprising a reinforcing edge 3 surrounding the entire net. According to the present invention the mesh made up by the plurality of netting strands 2 and the reinforcing edge 3 are woven in one piece. The load-restraining net 1 shown in figure 1 also has four loops 4 in connection with the reinforcing edge 3. These loops 4 do preferably have a similar structure as the reinforcing edge 3.

The reinforcing edge 3 is in a preferred embodiment a is a tubular knit as well as the loops 4. The tubular knit of the reinforcing edge 3 and the loops 4 is possible to integrate with the net mesh.

As also can be seen in figure 1 the sets of strands 2 from one side of the net 1 towards the centre of the net 1 are arranged such that each strand 2 in each set has a radius in the plane of net with a decreasing radius towards the centre of the net 1.

The foregoing is a disclosure of an example practicing the present invention. However, it is apparent that method incorporating modifications and variations will be obvious to one skilled in the art. Inasmuch as the foregoing disclosure is intended to enable one skilled in the art to practice the instant invention, it should not be construed to be limited thereby, but should be construed to include such modifications and variations as fall within the scope of the claims. For instance, the loops could be made in a different manor from the reinforcing edge. Above a tubular knit is described for the reinforcing edge as well as the loops, but the loops could for example be more rope like.

## Claims

1. A load-restraining net (1) comprising a plurality of netting strands (2) providing a mesh, further comprising a reinforcing edge (3) on at least a part of the net periphery,
**characterised in**
**that** the reinforcing edge (3) constitutes a part of the net (1) as woven.

2. A load-restraining net (1) according to claim 1, wherein the reinforcing edge (3) surrounds the entire net.

3. A load-restraining net (1) according to any of the preceding claims,
wherein the reinforcing edge (3) comprises at least two loops (4) for attaching the net to an object.

4. A load-restraining net (1) according to any of the preceding claims,
wherein the reinforcing edge (4) is a tubular knit.

5. A load-restraining net (1) according to any of the preceding claims,
wherein at least a set of strands (2) from one side of the net towards the centre of the net are arranged such that each strand (2) in said at least one set has a radius in the plane of net with a decreasing radius towards the centre of the net.
